# EUROPEAN PATENT APPLICATION

(11) **EP 4 692 466 A1**
(43) Date of publication of application: **11.02.2026**
(21) Application number: 24778620.5
(22) Date of filing: 25.01.2024
(51) Int. Cl.: E02F 9/20, E02F 9/26

(54) **REMOTE CONTROL SYSTEM FOR CONSTRUCTION MACHINE**

(30) Priority: 27.03.2023 JP 2023050677
(71) Applicant: Hitachi Construction Machinery Co., Ltd., Tokyo 110-0015 (JP)
(72) Inventor: YAMADA, Shihono, Tsuchiura-shi, Ibaraki 300-0013 (JP); ANAHARA, Keiichirou, Tsuchiura-shi, Ibaraki 300-0013 (JP); KATAOKA, Tomoaki, Tsuchiura-shi, Ibaraki 300-0013 (JP); HAGIWARA, Naoki, Tsuchiura-shi, Ibaraki 300-0013 (JP)
(74) Representative: MERH-IP Matias Erny Reichl Hoffmann Patentanwälte PartG mbB
(86) International application number: PCT/JP2024/002284
(87) International publication number: WO 2024/202474

(57) **Abstract**

The present invention provides a remote control system for construction machinery that can prevent interference with the operator's operation or the worker's work around the construction machinery. The remote control system includes a remote control change-over switch that indicates whether the remote control of the excavator is enabled or disabled, an indicator light that displays the enabled state of the remote control around the excavator, a work light that illuminates the area around the excavator, a work light change-over switch that instructs the lighting or extinguishing of the work light, and a vehicle body controller that controls the brightness of the indicator light. The vehicle body controller reduces the brightness of the indicator light that shows the enabled state of the remote control around the excavator when the remote control change-over switch and the work light change-over switch indicate that the remote control is enabled and the work light is lit, compared to when the remote control change-over switch and the work light change-over switch indicate that the remote control is enabled and the work light is extinguished.

## Description

### Technical Field

The present invention relates to a remote control system for construction machinery.

### Background Art

Patent Document 1 discloses a remote control system for construction machinery, which is configured to remotely operate construction machinery by using a remote control device placed away from the construction machinery such as an excavator. This remote control system includes a remote control change-over switch that indicates whether the remote control of the construction machinery is enabled or disabled, and an indicator light that displays the enabled state of the remote control around the construction machinery. For example, an operator operating the remote control device around the construction machinery or a worker performing tasks around the construction machinery can confirm the enabled state of the remote control by the lighting of the indicator light.

### Prior Art Document

### Patent Documents

Patent Document 1: JP-A-09-023486

### Summary of the Invention

### Problem to be Solved by the Invention

The brightness of the indicator light needs to be strong enough for the operator or worker to confirm its lighting even when the surroundings of the construction machinery are bright, such as during the day. However, when the surroundings of the construction machinery are dark, such as at night, the brightness of the indicator light may be too dazzling, potentially hindering the operator's operation or the worker's tasks.

The present invention has been made in view of the above circumstances, and its purpose is to provide a remote control system for construction machinery that does not hinder the operator's operation or the worker's tasks around the construction machinery.

### Means for Solving the Problem

To achieve the above objective, the remote control system for construction machinery of the present invention includes a remote control change-over switch that indicates whether the remote control of the construction machinery is enabled or disabled, an indicator light that displays the enabled state of the remote control around the construction machinery, a work light that illuminates the surroundings of the construction machinery, a work light change-over switch that indicates the lighting or extinguishing of the work light, and a controller that controls the brightness of the indicator light. The controller reduces the brightness of the indicator light that shows the enabled state of the remote control and displays it around the construction machinery when the remote control is enabled by the remote control change-over switch and lighting is indicated by the work light change-over switch, compared to when the remote control is enabled by the remote control change-over switch and extinguishing is indicated by the work light change-over switch.

### Advantages of the Invention

According to the present invention, it is possible to prevent the operator's operation or the worker's tasks around the construction machinery from being hindered.

### Brief Description of the Drawings

[FIG. 1] is a block diagram showing the configuration of a remote control system according to an embodiment of the present invention.
[FIG. 2] is a left side view showing the structure of an excavator with the arrangement of indicator lights according to an embodiment of the present invention.
[FIG. 3] is a right side view showing the structure of an excavator with the arrangement of indicator lights according to an embodiment of the present invention.
[FIG. 4] is a perspective view showing the structure of the cab of an excavator with the arrangement of indicator lights according to an embodiment of the present invention.
[FIG. 5] is a top view showing the structure of an excavator with the arrangement of indicator lights and work lights according to an embodiment of the present invention.
[FIG. 6] is a flowchart showing the procedure of indicator light control according to an embodiment of the present invention.
[FIG. 7] is a flowchart showing the procedure of indicator light control in the first modification example of the present invention.
[FIG. 8] is a block diagram showing the configuration of a remote control system in the second modification example of the present invention.

### Mode for Carrying Out the Invention

An embodiment of the present invention will be described with reference to the drawings.

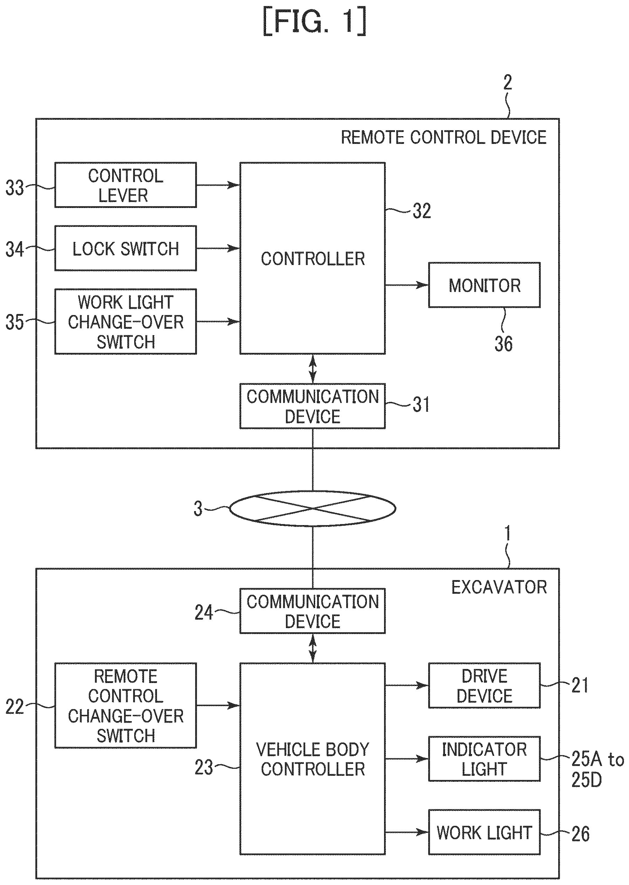

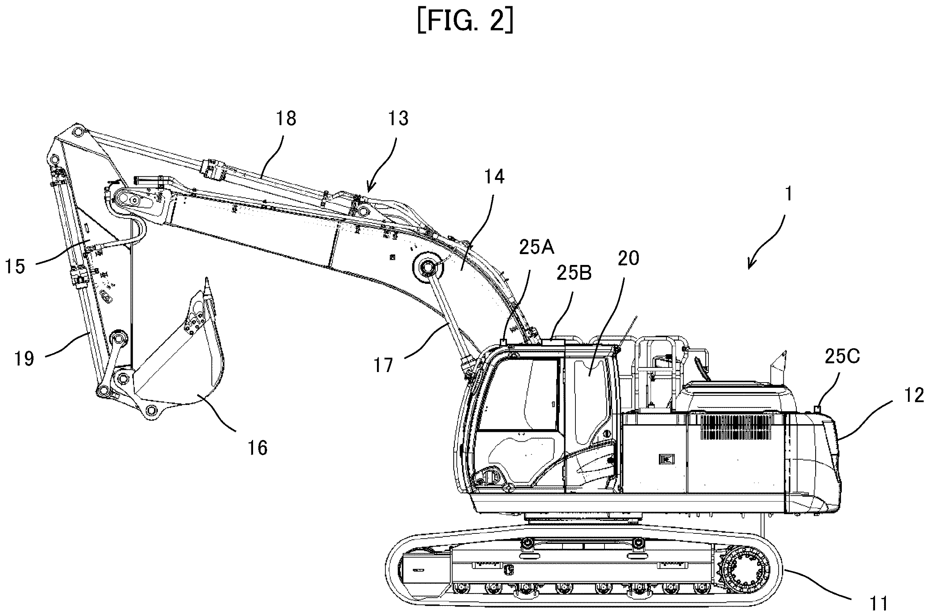

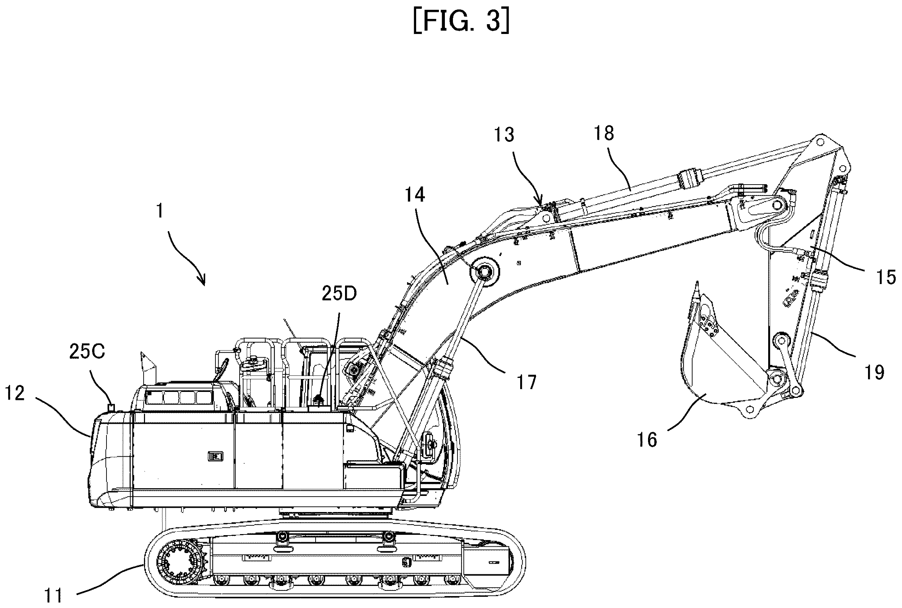

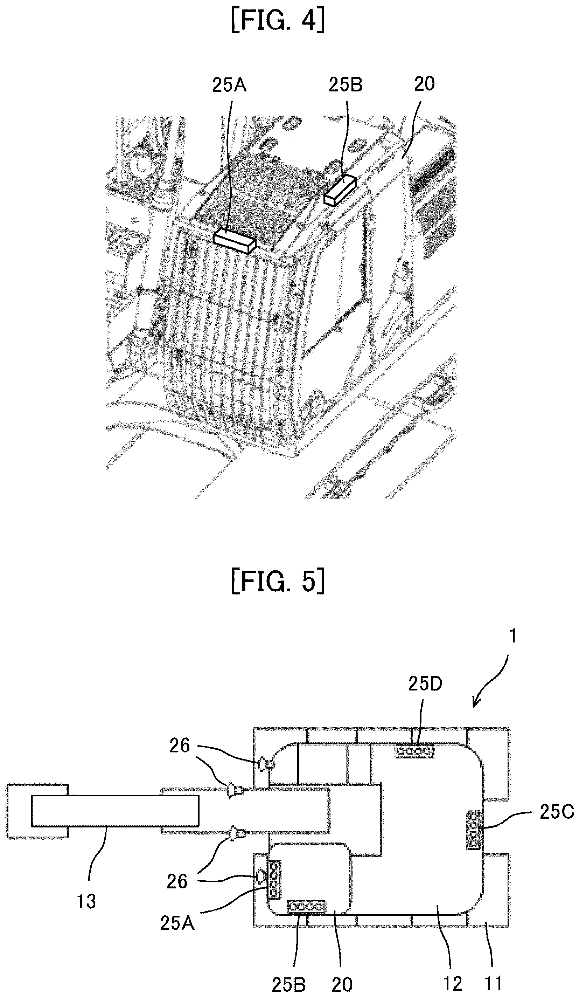

FIG. 1 is a block diagram showing the configuration of the remote control system in this embodiment. FIG. 2 is a left side view showing the structure of the excavator with the arrangement of indicator lights in this embodiment. FIG. 3 is a right side view showing the structure of the excavator with the arrangement of indicator lights in this embodiment. FIG. 4 is a perspective view showing the structure of the cab of the excavator with the arrangement of indicator lights in this embodiment. FIG. 5 is a top view showing the structure of the excavator with the arrangement of indicator lights and work lights in this embodiment. In FIGS. 2 to 4, for convenience, the arrangement of the work lights is not shown.

The remote control system of this embodiment includes a remote control device 2 located away from the excavator 1 and equipment mounted on the excavator 1 (in this embodiment, a remote control change-over switch, vehicle body controller, indicator light, and work light, which will be described later), and is configured to remotely operate the excavator 1 using the remote control device 2. In this embodiment, the operator operates the remote control device 2 while directly viewing the excavator 1.

The excavator 1 includes a travel body 11 capable of traveling, a swing body 12 provided on the upper side of the travel body 11 so as to be rotatable, and a work device 13 connected to the front side of the swing body 12 (left side in FIGS. 2 and 5, right side in FIG. 3). The travel body 11 travels by the rotation of the left and right travel motors, and the swing body 12 swings by the rotation of the swing motor.

The work device 13 includes a boom 14 pivotably connected to the swing body 12, an arm 15 pivotably connected to the distal end side of the boom 14, and a bucket 16 pivotably connected to the distal end side of the arm 15. The boom 14 pivots by the extension and retraction of the boom cylinder 17, the arm 15 pivots by the extension and retraction of the arm cylinder 18, and the bucket 16 pivots by the extension and retraction of the bucket cylinder 19.

Parts other than the cab 20 of the swing body 12 are equipped with a drive device 21 that drives multiple hydraulic actuators (specifically, the aforementioned travel motors, swing motor, boom cylinder 17, arm cylinder 18, and bucket cylinder 19, etc.).

The drive device 21 includes, for example, an engine, a hydraulic pump and a pilot pump driven by the engine, and multiple control valves that control the flow of pressure oil from the hydraulic pump to multiple hydraulic actuators. Furthermore, the drive device 21 includes multiple electromagnetic proportional valves that generate pilot pressure to operate multiple control valves, using the discharge pressure of the pilot pump as the base pressure. When any of the multiple electromagnetic proportional valves is controlled, the corresponding hydraulic actuator is driven.

The drive device 21 is configured to switch between a lock state that restricts the drive of all hydraulic actuators and an unlock state that permits the drive of all hydraulic actuators. In detail, the drive device 21 includes a lock valve that can switch the oil passage between the pilot pump and multiple electromagnetic proportional valves between a blocked state and a communication state. When the lock valve is controlled to the blocked state, the drive of all hydraulic actuators is restricted, and when the lock valve is controlled to the communication state, the drive of all hydraulic actuators is permitted.

The cab 20 of the swing body 12 is equipped with a remote control change-over switch 22 that indicates whether the remote control of the excavator 1 is enabled or disabled, and a vehicle body controller 23 (controller). The vehicle body controller 23 can communicate with the controller 32 of the remote control device 2 via the communication device 24 of the excavator 1, the communication network 3, and the communication device 31 of the remote control device 2. The vehicle body controller 23 or the controller 32 includes a processor that executes processing according to a program and a memory that stores programs and data.

When the remote control of the excavator 1 is enabled by the remote control change-over switch 22, the vehicle body controller 23 enables commands from the controller 32 of the remote control device 2 (details will be described later). The vehicle body controller 23 then lights the indicator lights 25A to 25D arranged on the outside of the excavator 1 (in this embodiment, the front, left, rear, and right sides of the excavator 1, including the cab 20 of the swing body 12 and other parts). Although there are four indicator lights in this embodiment, the number is not limited to this.

Each indicator light is configured with, for example, a blue lamp, a green lamp, a yellow lamp, and a red lamp arranged horizontally in that order, and displays the operating state of the excavator 1 along with the enabled state of the remote control of the excavator 1 to the surroundings. In detail, the lighting of the blue lamp displays the enabled state of the remote control of the excavator 1 and the undetected state of any abnormality in the excavator 1. The lighting of the green lamp displays the ON state of the communication device 24. The lighting of the yellow lamp displays the driving state of the engine. The lighting of the red lamp displays the enabled state of the remote control of the excavator 1 and the detected state of any abnormality in the excavator 1. Therefore, when the remote control of the excavator 1 is enabled, no abnormality is detected in the excavator 1, the communication device 24 is ON, and the engine is in a driving state, the blue lamp, green lamp, and yellow lamp light up, and the red lamp turns off. On the other hand, when the remote control of the excavator 1 is enabled and an abnormality is detected in the excavator 1, the blue lamp, green lamp, and yellow lamp turn off, and the red lamp lights up.

The remote control device 2 includes, in addition to the aforementioned communication device 31 and controller 32, multiple control levers 33, a lock switch 34, a work light change-over switch 35, and a monitor 36.

The multiple control levers 33 of the remote control device 2 instruct the operation of the excavator 1 (specifically, the travel of the travel body 11, the swing of the swing body 12, the rotation of the boom 14, the rotation of the arm 15, and the rotation of the bucket 16), and output signals generated by a potentiometer to the controller 32 according to their operation. The controller 32 of the remote control device 2 transmits operation commands corresponding to the aforementioned signals to the excavator 1. The vehicle body controller 23 of the excavator 1, when the remote control is enabled by the remote control change-over switch 22, enables the operation commands from the controller 32 of the remote control device 2 and controls the drive device 21 (specifically, the aforementioned electromagnetic proportional valve) accordingly.

The lock switch 34 of the remote control device 2 indicates the lock or unlock state of the drive device 21 of the excavator 1 and outputs a signal to the controller 32 according to its operation. The controller 32 of the remote control device 2 transmits a lock command or unlock command corresponding to the aforementioned signal to the excavator 1. When the remote control of the excavator 1 is enabled by the remote control change-over switch 22, the vehicle body controller 23 of the excavator 1 enables the lock command or unlock command from the controller 32 of the remote control device 2, and accordingly controls the drive device 21 (specifically, the aforementioned lock valve).

The work light change-over switch 35 of the remote control device 2 indicates the turning on or off of the work light 26 of the excavator 1 and outputs a signal to the controller 32 according to its operation. The controller 32 of the remote control device 2 transmits a lighting command or extinguishing command corresponding to the aforementioned signal. The vehicle body controller 23 of the excavator 1, when the remote control is enabled by the remote control change-over switch 22, enables the lighting command or extinguishing command from the controller 32 of the remote control device 2 and turns the work light 26 on or off accordingly.

The work light 26 of the excavator 1 is arranged on the outside of the excavator 1 (in this embodiment, on the front side of the excavator 1, including the cab 20 of the swing body 12 and other parts and the work device 13) and illuminates the surroundings of the excavator 1 (in this embodiment, the surroundings of the work device 13). It should be noted that although the work light 26 in this embodiment is four, it is not limited to this.

The vehicle body controller 23 of the excavator 1, when the remote control is enabled by the remote control change-over switch 22, transmits the state quantities detected by sensors or the like (specifically, for example, the engine speed) to the remote control device 2. The controller 32 of the remote control device 2 receives the state quantities of the excavator 1 and displays them on the monitor 36.

By the way, the brightness of the indicator lights 25A to 25D of the excavator 1 needs to be strong enough for the operator (who operates the remote control device 2 around the excavator 1 or works around the excavator 1) to confirm the lighting of the indicator lights 25A to 25D, even when the surroundings of the excavator 1 are bright, such as during the day. However, when the surroundings of the excavator 1 are dark, such as at night, the brightness of the indicator lights 25A to 25D may be too dazzling, potentially hindering the operator's operation or the worker's work.

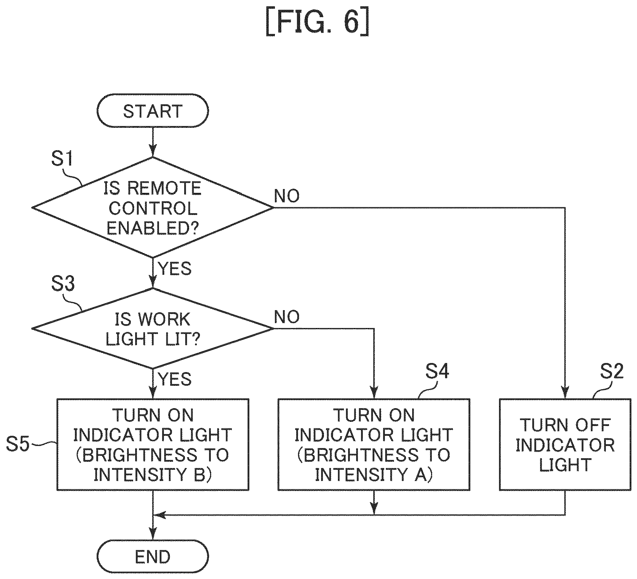

Therefore, as a feature of this embodiment, the vehicle body controller 23 of the excavator 1 determines that the surroundings of the excavator 1 are bright when the work light 26 is off, and determines that the surroundings are dark when the work light 26 is on. Then, the vehicle body controller 23 controls the brightness of the indicator lights 25A to 25D according to the switching of the work light 26 between off and on. The details of this indicator light control will be explained using FIG. 6. FIG. 6 is a flowchart showing the procedure of the indicator light control in this embodiment.

In step S1, the vehicle body controller 23 determines whether the remote control of the excavator 1 is enabled by the remote control change-over switch 22. If the remote control of the excavator 1 is disabled by the remote control change-over switch 22, it moves to step S2. In step S2, the vehicle body controller 23 turns off the indicator lights 25A to 25D.

In step S1, if the remote control of the excavator 1 is enabled by the remote control change-over switch 22, it moves to step S3. In step S3, the vehicle body controller 23 determines whether the lighting of the work light 26 is instructed by the work light change-over switch 35. If the extinguishing of the work light 26 is instructed by the work light change-over switch 35, it moves to step S4. In step S4, the vehicle body controller 23 turns on the indicator lights 25A to 25D and controls their brightness to intensity A.

In step S3, if the lighting of the work light 26 is instructed by the work light change-over switch 35, it moves to step S5. In step S5, the vehicle body controller 23 turns on the indicator lights 25A to 25D and controls their brightness to intensity B (where B<A).

In addition, the controller 32 of the remote control device 2 keeps the brightness of the monitor 36 constant, regardless of the switching on and off of the work light 26 of the excavator 1.

As described above, in this embodiment, when the remote control is enabled by the remote control change-over switch 22 and the extinguishing is instructed by the work light change-over switch 35, the brightness of the indicator lights 25A to 25D, which indicate the enabled state of the remote control, is controlled to intensity A and displayed around the excavator 1. This allows the operator operating the remote control device 2 around the excavator 1, or the worker working around the excavator 1, to confirm the lighting of the indicator lights 25A to 25D, even when the surroundings of the excavator 1 are bright, such as during the day. On the other hand, when the remote control is enabled by the remote control change-over switch 22 and the lighting is instructed by the work light change-over switch 35, the brightness of the indicator lights 25A to 25D, which indicate the enabled state of the remote control, is reduced to intensity B and displayed around the excavator 1. This allows the brightness of the indicator lights 25A to 25D to be adjusted so as not to hinder the operator's operation or the worker's work around the excavator 1, for example, when the surroundings of the excavator 1 are dark, such as at night. As a result, work efficiency can be maintained.

It should be noted that in the above embodiment, the brightness of the work light 26 of the excavator 1 when lit was explained as not being gradually variable, but it is not limited to this. That is, the brightness of the work light 26 of the excavator 1 when lit may be gradually variable according to the operation of the work light change-over switch 35. Furthermore, the vehicle body controller 23 of the excavator 1 may gradually reduce the brightness of the indicator lights 25A to 25D according to the brightness level of the work light 26 when lit. Specifically, the brighter the work light 26, the dimmer the indicator lights 25A to 25D may be.

Also, in the above embodiment, the vehicle body controller 23 of the excavator 1 was explained as not flashing the indicator lights 25A to 25D, but it is not limited to this. That is, the vehicle body controller 23 turns on (continuously lights) the indicator lights 25A to 25D when the remote control is enabled by the remote control change-over switch 22 and the extinguishing is instructed by the work light change-over switch 35. However, when the remote control is enabled by the remote control change-over switch 22 and the lighting is instructed by the work light change-over switch 35, the indicator lights 25A to 25D may be flashed (intermittently lit). As one specific example, when the excavator 1 is in a remote control enabled state, the communication device 24 is ON, the engine is in a driving state, and the excavator 1 is in a non-detection state of abnormality, two states (the state where the blue lamp and yellow lamp are lit and the green lamp is off, and the state where the blue lamp and yellow lamp are off and the green lamp is lit) may be alternated. This makes it possible to flash in such a way that the colors of adjacent lamps do not mix.

Also, in the above embodiment, the lock switch 34 is provided in the remote control device 2 to indicate the lock or unlock state of the drive device 21. Then, the lock valve of the drive device 21 is switched by the signal output from the vehicle body controller 23 according to the instruction of the lock switch 34, but it is not limited to this. That is, for example, the lock switch 34 is provided in the excavator 1 and detects the operation of the lock lever that indicates the lock or unlock state of the drive device 21. Then, the lock valve of the drive device 21 may be switched by the signal output from the lock switch 34. It should be noted that the lock switch 34 of the remote control device 2 or the excavator 1 corresponds to a lock state detection device that detects the lock and unlock states of the drive device.

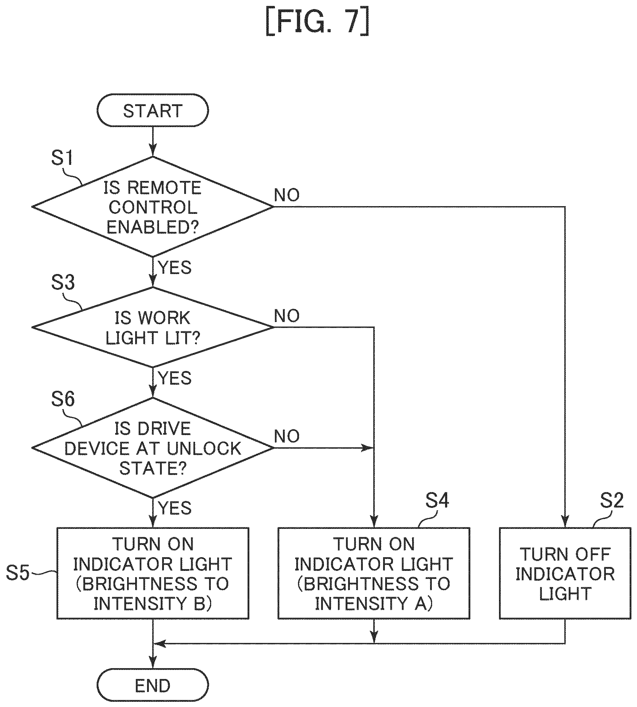

In the above embodiment, the vehicle body controller 23 of the excavator 1 was described as controlling the brightness of the indicator lights 25A to 25D regardless of the lock and unlock states of the drive device 21, but this is not limited to that. That is, for example, as shown in the modification example in FIG. 7, the vehicle body controller 23 may control the brightness of the indicator lights 25A to 25D according to the switching between the lock and unlock states of the drive device 21. In more detail, if remote control is enabled by the remote control change-over switch 22 and lighting is instructed by the work light change-over switch 35, the process proceeds to step S6 via steps S1 and S3. In step S6, the vehicle body controller 23 determines whether the unlock state of the drive device 21 is detected (or instructed) by the lock switch 34. If the unlock state of the drive device 21 is detected (or instructed) by the lock switch 34, the process proceeds to step S5. In step S5, the brightness of the indicator lights 25A to 25D, which indicate the enabled state of remote control, is reduced and displayed around the excavator 1, compared to when remote control is enabled by the remote control change-over switch 22 and lighting off is instructed by the work light change-over switch 35. On the other hand, if the lock state of the drive device 21 is detected (or instructed) by the lock switch 34, the process proceeds to step S4. In step S4, the indicator lights 25A to 25D are controlled to the same brightness as when remote control is enabled by the remote control change-over switch 22 and lighting off is instructed by the work light change-over switch 35, and the enabled state of remote control may be displayed around the excavator 1 with that brightness.

In the above embodiment, the vehicle body controller 23 of the excavator 1 was described as controlling the brightness of the indicator lights 25A to 25D regardless of the presence or absence of abnormality detection in the excavator 1, but this is not limited to that. That is, the vehicle body controller 23 may control the brightness of the indicator lights 25A to 25D according to the presence or absence of abnormality detection in the excavator 1. In more detail, if remote control is enabled by the remote control change-over switch 22 and lighting is instructed by the work light change-over switch 35, and no abnormality is detected in the excavator 1, the brightness of the indicator lights 25A to 25D (specifically, blue, green, and yellow lamps) indicating the enabled state of remote control is reduced and displayed around the excavator 1, compared to when remote control is enabled by the remote control change-over switch 22 and lighting off is instructed by the work light change-over switch 35. On the other hand, if remote control is enabled by the remote control change-over switch 22 and lighting is instructed by the work light change-over switch 35, and an abnormality is detected in the excavator 1, the indicator lights 25A to 25D (specifically, red lamp) are controlled to the same brightness as when remote control is enabled by the remote control change-over switch 22 and lighting off is instructed by the work light change-over switch 35, and the enabled state of remote control may be displayed around the excavator 1 with that brightness.

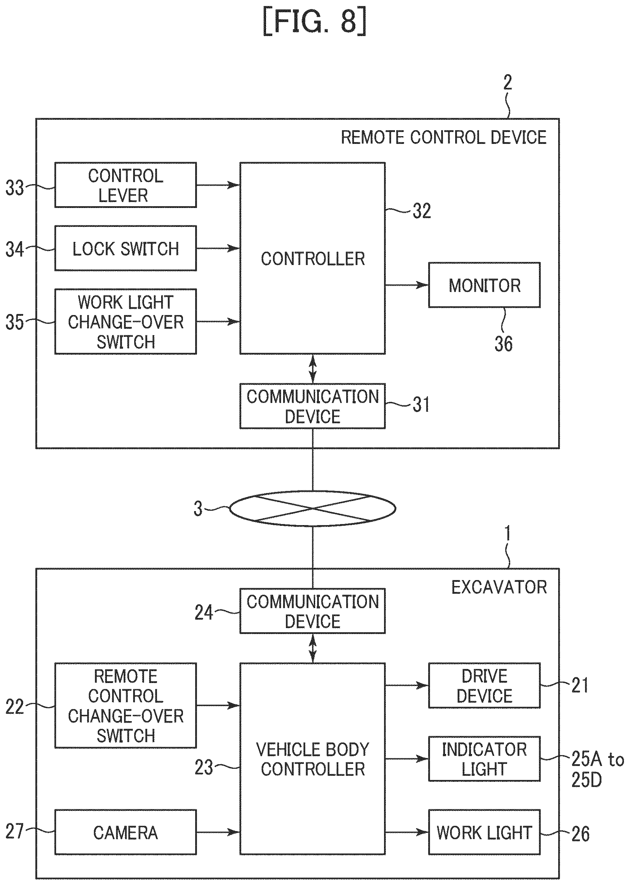

In the above embodiment, the excavator 1 was described as not being equipped with a camera for capturing the surroundings of the excavator 1, but this is not limited to that. That is, as shown in the modification example in FIG. 8, the excavator 1 may be equipped with a camera 27 for capturing the surroundings of the excavator 1 (particularly around the work device 13). The vehicle body controller 23 of the excavator 1 transmits the video from the camera 27 to the remote control device 2. The controller 32 of the remote control device 2 displays the video from the camera 27 on the monitor 36. The operator operates the remote control device 2 while visually checking the surroundings of the excavator 1 displayed on the monitor 36. The controller 32 of the remote control device 2 keeps the brightness of the monitor 36 constant regardless of the switching of the work light 26 of the excavator 1 between on and off.

In the above embodiment, the remote control change-over switch 22 was described as being arranged on the excavator 1, but this is not limited to that, and it may be arranged on the remote control device 2. Also, in the above embodiment, the work light change-over switch 35 was described as being arranged on the remote control device 2, but this is not limited to that, and it may be arranged on the excavator 1.

Note that in the above, the case where the excavator 1 is used as construction machinery was described as an example, but this is not limited to that, and other construction machinery may be used.

### Description of Reference Characters

- 1:: Excavator (construction machinery)
- 2:: Remote control device
- 21:: Drive device
- 22:: Remote control change-over switch
- 23:: Vehicle body controller (controller)
- 25A: to 25D: Indicator lights
- 26:: Work light
- 27:: Camera
- 34:: Lock switch (lock state detection device)
- 35:: Work light change-over switch
- 36:: Monitor

## Claims

1. A remote control system for construction machinery comprising:
wherein the remote control system includes a remote control change-over switch that indicates the enablement or disablement of remote control of the construction machinery, an indicator light that displays the enabled state of remote control around the construction machinery, a work light that illuminates the surroundings of the construction machinery, a work light change-over switch that instructs the lighting or extinguishing of the work light, and a controller that controls the brightness of the indicator light;
wherein the controller reduces the brightness of the indicator light that shows the enabled state of remote control and displays it around the construction machinery when the remote control is enabled by the remote control change-over switch and lighting is instructed by the work light change-over switch, compared to when the remote control is enabled by the remote control change-over switch and extinguishing is instructed by the work light change-over switch.

2. The remote control system for construction machinery according to claim 1;
wherein the remote control system further includes a lock state detection device that detects the lock state and unlock state of the drive device of the construction machinery;
wherein the controller reduces the brightness of the indicator light that shows the enabled state of remote control and displays it around the construction machinery when the remote control is enabled by the remote control change-over switch, lighting is instructed by the work light change-over switch, and the unlock state is detected by the lock state detection device, compared to when the remote control is enabled by the remote control change-over switch and extinguishing is instructed by the work light change-over switch;
wherein furthermore, the controller controls the brightness of the indicator light to be the same as when the remote control is enabled by the remote control change-over switch and extinguishing is instructed by the work light change-over switch, and displays the enabled state of remote control at that brightness around the construction machinery when the remote control is enabled by the remote control change-over switch, lighting is instructed by the work light change-over switch, and the lock state is detected by the lock state detection device.

3. The remote control system for construction machinery according to claim 1;
wherein the indicator light is configured to display the detection state of abnormalities in the construction machinery along with the enabled state of remote control;
wherein the controller reduces the brightness of the indicator light that shows the enabled state of remote control and displays it around the construction machinery when the remote control is enabled by the remote control change-over switch, lighting is instructed by the work light change-over switch, and no abnormalities are detected in the construction machinery, compared to when the remote control is enabled by the remote control change-over switch and extinguishing is instructed by the work light change-over switch;
wherein furthermore, the controller controls the brightness of the indicator light to be the same as when the remote control is enabled by the remote control change-over switch and extinguishing is instructed by the work light change-over switch, and displays the enabled state of remote control at that brightness around the construction machinery when the remote control is enabled by the remote control change-over switch, lighting is instructed by the work light change-over switch, and abnormalities are detected in the construction machinery.

4. The remote control system for construction machinery according to claim 1;
wherein the controller gradually reduces the brightness of the indicator light according to the brightness level when the work light is lit.

5. The remote control system for construction machinery according to claim 1;
wherein the controller causes the indicator light that shows the enabled state of remote control to blink and display it around the construction machinery when the remote control is enabled by the remote control change-over switch and lighting is instructed by the work light change-over switch.

6. The remote control system for construction machinery according to claim 1;
wherein the remote control system further includes a remote control device that remotely operates the construction machinery and a monitor arranged in the remote control device that displays the state quantities of the construction machinery;
the brightness of the monitor remains constant regardless of the switching between lighting and extinguishing of the work light.

7. The remote control system for construction machinery according to claim 1;
wherein the remote control system further includes a camera that captures the surroundings of the construction machinery, a remote control device that remotely operates the construction machinery, and a monitor arranged in the remote control device that displays the images from the camera;
the brightness of the monitor remains constant regardless of the switching between lighting and extinguishing of the work light.
